# EUROPÄISCHE PATENTANMELDUNG

(11) **EP 0 890 780 A2**
(43) Veröffentlichungstag der Anmeldung: **13.01.1999**
(21) Anmeldenummer: 98111406.9
(22) Anmeldetag: 20.06.1998
(51) Int. Cl.: F16L 59/02, E04C 2/36, E04B 1/74

(54) **Dämmplatte**

(30) Priorität: 10.07.1997 DE 19729467
(71) Anmelder: HERAKLITH AG, 9586 Fürnitz (AT)
(72) Erfinder: Mittendrein, Hannes, 86163 Augsburg (DE); Seidler, Oskar, 9500 Villach (DE)
(74) Vertreter: Becker, Thomas, Dr., Dipl.-Ing.

(57) **Zusammenfassung**

Die Erfindung betrifft eine Dämmplatte, wie sie insbesondere zur thermischen Isolierung in vielen Bereichen der Technik verwendet wird, mit folgenden Merkmalen:
a) einer ersten Schicht (10) auf Basis von Mineralfasern mit mehreren Ausnehmungen (12) auf mindestens einer Hauptoberfläche (14),
b) einer zweiten Schicht aus einem keramischen Werkstoff, der die Ausnehmungen (12) der ersten Schicht mit korrespondierenden Stegen (22) ausfüllt und im übrigen parallel zur korrespondierenden Hauptoberfläche (14) der ersten Schicht (10) verläuft.

## Beschreibung

Die Erfindung betrifft eine Dämmplatte, wie sie insbesondere zur thermischen Isolierung in vielen Bereichen der Technik, aber auch im Hoch- und Tiefbau verwendet wird. Beispielsweise zur inneren Auskleidung von Industrieöfen wie Tunnelöfen ist es bekannt, Dämmplatten auf Basis keramischer Fasern einzusetzen. Dies gilt insbesondere für Öfen, die diskontinuierlich arbeiten oder am Wochenende abgeschaltet werden. Der Vorteil derartiger keramischer Faserisolierungen besteht darin, daß sie eine geringe Wärmespeicherkapazität aufweisen und deshalb ohne nennenswerte thermische Verluste in solchen Öfen eingesetzt werden können.

Andere Anwendungsbereiche sind Kesselisolierungen, Isolierungen für Trockneranlagen oder dergleichen.

Trotz der umfangreichen Verwendung derartiger Dämmplatten in der Vergangenheit gibt es eine Vielzahl ungelöster Probleme. So stellt die Befestigung (Verankerung) bekannter Dämmplatten zum Beispiel an den Wänden oder Decken eines Ofens ein erhebliches technisches Problem dar, insbesondere aufgrund der relativ geringen Eigenfestigkeit der Dämmelemente. Zur Fixierung im Wandbereich sind eine Vielzahl von entsprechenden Ankern notwendig. Im Deckenbereich müssen aufwendige Tragkonstruktionen vorgesehen werden. Meist sind diese Tragkonstruktionen metallisch, woraus insbesondere bei Hochtemperaturanwendungen eine eingeschränkte Haltbarkeit resultiert.

Darüber hinaus kommt es zum Teil zu erheblichen Faserverlusten durch thermische Belastungen und mechanische Beanspruchungen, bei Ofenanwendungen insbesondere durch heiße Ofengase.

Zur Reduzierung der vorgenannten Probleme sind Verbundplatten bekannt, bei denen eine Mineralfaserplatte ein- oder beidseitig mit Platten auf Calziumsilikatbasis verklebt ist. Hierdurch lassen sich die Erosionseigenschaften zwar verbessern, nachteilig ist jedoch, daß es aufgrund der relativ schweren Deckschichten zu Scherbeanspruchungen im Bereich der Mineralfaserplatte kommt, so daß die Standzeit derartiger Verbundplatten relativ gering ist.

Der Erfindung liegt entsprechend die Aufgabe zugrunde, eine Dämmplatte der eingangs genannten Art anzubieten, die eine leichte Verlegung erlaubt, eine möglichst gute Erosionsbeständigkeit aufweist, thermisch auch bei höheren Betriebstemperaturen beständig ist und für unterschiedlichste Anwendungen eingesetzt werden kann.

Dabei geht die Erfindung zunächst von der an sich bekannten Erkenntnis aus, daß hierzu in besonderem Maße Verbund-Dämmplatten geeignet sind, bei denen die Mineralfaserschicht mechanisch und thermisch stabilisiert wird.

Im Gegensatz zum Stand der Technik wird jedoch eine Dämmplatte vorgeschlagen, bei denen die Mineralfaserschicht einerseits und die Deckschicht andererseits nicht nur (gegebenenfalls oberflächlich) miteinander verbunden sind, sondern 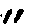 ineinander verzahnt" sind, also die Deckschicht in die Mineralfaserschicht greift beziehungsweise umgekehrt die Mineralfaserschicht dreidimensional mit der Deckschicht verbunden ist.

Auf diese Weise läßt sich eine erhebliche mechanische und letztendlich auch thermische Stabilisierung ebenso erreichen wie ein sicherer Schutz der Mineralfasern vor Verlust. Darüber hinaus kann mit einer solchen Verbundplatte die Konfektionierung wesentlich erleichtert werden.

In ihrer allgemeinsten Ausführungsform betrifft die Erfindung eine Dämmplatte mit folgenden Merkmalen:
- einer ersten Schicht auf Basis von Mineralfasern mit mehreren Ausnehmungen auf mindestens einer Hauptoberfläche, sowie
- einer zweiten Schicht aus einem keramischen Werkstoff, der die Ausnehmungen der ersten Schicht mit korrespondierenden Stegen ausfüllt und im übrigen parallel zur korrespondierenden Hauptoberfläche der ersten Schicht verläuft.

Auf diese Weise wird ein 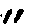 dreidimensionaler Verbundkörper" ausgebildet, der die für die Isolierung wesentliche Mineralfaserschicht schützt und stabilisiert.

Die zweite Schicht kann direkt (flächig) auf der ersten Schicht verlaufen und gegebenenfalls materialschlüssig mit der Hauptoberfläche der ersten Schicht verbunden sein. Sie kann aber auch im Abstand dazu verlaufen, wobei zur Herstellung zwischen die beiden Schichten eine Schicht aus einem ausbrennbaren Material angeordnet wird, welches ebenfalls mit den genannten Ausnehmungen ausgebildet wird und im übrigen später ausgebrannt wird. Der so gestaltete Hohlraum kann eine Dicke von beispielsweise 5 - 100 mm aufweisen.

Die Ausnehmungen können diskrete Ausnehmungen sein, beispielsweise Sackbohrungen, T- oder I-förmige Vertiefungen, und zwar sowohl parallel wie senkrecht zur Hauptoberfläche. Nach einer Ausführungsform sind die Ausnehmungen nutartig gestaltet und laufen beispielsweise von einer Seitenkante der Mineralfaserplatte zur gegenüberliegenden Seitenkante.

In Fortbildung dieser Ausführungsform können die Ausnehmungen auch gitterartig als sich kreuzende Nuten ausgebildet sein, wie dies im nachfolgenden Ausführungsbeispiel noch näher erläutert wird.

Auf diese Weise wird eine 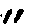 wabenartige" Struktur sowohl in der Mineralfaserschicht als auch als Bestandteil der Deckschicht ausgebildet.

Die Zahl und Anordnung der Ausnehmungen (Vertiefungen) ist grundsätzlich beliebig. Sie wird sich in der Regel nach dem jeweiligen Anwendungsfall richten.

So können die Ausnehmungen eine unterschiedliche Tiefe aufweisen, und zwar einzelne Ausnehmungen, beispielsweise Nuten, entlang ihrer Länge ebenso wie benachbarte Nuten. Auch ihre Breite kann variieren.

So kann beispielsweise bei einer rechteckigen Dämmplatte die Nuttiefe im Randbereich geringer als in der Plattenmitte sein, insbesondere dann, wenn die Deckschicht randseitig auch die Seitenflächen der Dämmplatte zumindest teilweise übergreift.

Umgekehrt können die einzelnen Nuten, die beispielsweise parallel zu den Seitenkanten der Dämmplatte verlaufen, auch randseitig tiefer als in der Mitte ausgebildet werden, insbesondere dann, wenn die Verankerung der Dämmplatte randseitig erfolgen soll, so daß hier höhere mechanische Belastungen gefordert werden.

Die Tiefe der Ausnehmungen (Nuten) wird im Normalfall ¹/₁₀ bis ⁷/₁₀ der Gesamtdicke der Mineralfaser-Lage betragen und beispielsweise bei einer Mineralfaser-Dämmschicht von 6 bis 10 cm Dicke zwischen 1 und 5 cm liegen.

Die Breite der Nuten richtet sich zunächst nach der Art und Viskosität der aufzübringenden keramischen Beschichtungen. Insbesondere bei freifließenden keramischen Massen (Mörteln) genügt es, wenn die Ausnehmungen (Nuten) eine Breite zwischen 1 und 3 mm aufweisen.

Die Penetration der nach Art eines keramischen Schlickers in die Ausnehmungen eingebrachten keramischen Masse kann durch Vibration der ersten Schicht aus Mineralfaser gefördert werden.

Die auf der Hauptoberfläche der Mineralfaserschicht aufgebrachte keramische Schicht wird üblicherweise eine Dicke von 1 bis 10 mm aufweisen.

Aufgrund der porösen Faserstruktur kommt es zwischen dem Fasermaterial und der keramischen Masse zu einer intensiven Verankerung, die durch chemische/hydraulische Reaktionen sowohl in der keramischen Masse selbst als auch im Kontaktbereich keramische Masse/Mineralfaser zusätzlich verbessert wird.

Wenngleich grundsätzlich Mineralfasermatten oder Vliese als erste Schicht verwendet werden können (wobei der Begriff 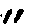 Mineralfaser" auch keramische Fasern einschließen soll) so erweist sich eine in gewissem Umfang eigenstabile Mineralfaserplatte als besonders vorteilhaft, da sie aufgrund ihrer Eigenstabilität die Konfektionierung des Verbundkörpers insgesamt erleichtert und auch das Einbringen der Ausnehmungen auf einfachem Wege möglich ist.

Beispielsweise bei Sacklöchern können diese durch einfaches Bohren ausgebildet werden. Nuten können über entsprechende Messer oder Sägen eingefräst werden. Insbesondere bei gradlinig verlaufenden nutartigen Ausnehmungen kann dies in einem kontinuierlichen Arbeitsprozeß erfolgen. Dabei kann auch durch Variation des Abstandes zwischen der Mineralfaserplatte und dem Messer/der Säge die Tiefe der Nut nahezu beliebig eingestellt werden.

Die Auswahl des keramischen Werkstoffes für die zweite Schicht erfolgt anhand des jeweiligen Anwendungsbereiches. Zum Beispiel zur Verwendung in Industrieöfen für die keramische Industrie, wo Temperaturen bis etwa 1.400 °C erreicht werden, bietet sich die Auswahl eines feuerfesten keramischen Werkstoffes zur Ausbildung der Deckschicht (zweiten Schicht) an. Im besonderen Maße sind hierzu hochtonerdehaltige Werkstoffe, also Werkstoffe mit einem hohen Al₂O₃-Gehalt geeignet.

Die keramische Schicht (Masse) kann als bindemittelhaltiger Schlicker (Mörtel) aufgebracht werden, wobei das Bindemittel hydraulisch sein kann. Der Begriff 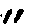 keramischer Werkstoff" umfaßt dabei auch feuerfeste keramische Zemente, die ebenso wie andere bindemittelhaltige keramische Systeme nach einer chemischen oder hydraulischen Reaktion abbinden und eine erhebliche Eigenstabilität aufweisen, die ausreicht, den so hergestellten Verbundkörper transportieren und montieren zu können. Die endgültige Aushärtung der Masse kann dann gegebenenfalls erst bei der Anwendung (zum Beispiel im Ofen) erfolgen.

Das Dickenverhältnis der ersten Schicht zur zweiten Schicht richtet sich ebenfalls nach dem jeweiligen Anwendungsfall.

Da die erste Schicht (aus Mineralfasern) auch bei dem beschriebenen Verbundkörper maßgeblich für die thermischen Isoliereigenschaften ist und bleibt, kommt der zweiten Schicht (Deckschicht) überwiegend nur die Funktion einer mechanischen Trägerschicht sowie eines Schutzes vor Faserverlust zu. Sie kann entsprechend dünn ausgebildet werden, so daß das Dickenverhältnis der ersten Schicht zur zweiten Schicht in der Regel zwischen 10:1 bis 3:1 liegen wird.

Die Dämmplatte kann bei sehr guter Warmfestigkeit, sehr guten thermischen Isoliereigenschaften und sehr guter Verschleißfestigkeit auch im Hoch- und Tiefbau eingesetzt werden. Dabei können auch sehr dünne, und entsprechend preiswerte Dämmplatten Verwendung finden.

Der so hergestellte und im Bereich der zweiten Schicht abgebundene Verbundkörper ist mechanisch stabil und kann leicht über entsprechende Anker, Haken oder dergleichen sowohl wandwie deckenseitig montiert werden. Dabei können durch entsprechende Formgebungen der Dämmplatte auch Befestigungssysteme eingesetzt werden, die ausschließlich wand- oder deckenseitig verlaufen, also nicht über die Deckfläche vorstehen. Damit werden derartige Verankerungssysteme zum Beispiel dann, wenn die Dämmplatten zur Auskleidung eines Ofens eingesetzt werden, auch gegenüber übermäßigem thermischen Angriff geschützt und ihr Verschleiß dadurch minimiert.

Die Verlegung der Dämmelemente kann dadurch erleichtert werden, daß zumindest einzelne Seitenflächen falzartig gestaltet sind. Ebenso ist es möglich, einzelne Seitenflächen mit längs verlaufenden Nuten oder federartigen Stegen auszubilden. Auf diese Art und Weise wird eine 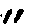 überlappende" Verlegung benachbarter Dämmplatten ermöglicht und damit eine praktisch diffusionsfreie geschlossene Isolierung ausgebildet.

Eine falzartige Ausbildung von Seitenflächen der Dämmplatte schafft auch die Möglichkeit, die Dämmplatte auf korrespondierende Haken, die wand- oder deckenseitig montiert werden, aufzusetzen beziehungsweise aufzuschieben. Auch hierzu gibt die nachfolgende Figurenbeschreibung noch nähere Hinweise.

Die Dämmelemente können ebenfalls als freitragende Systemelemente eingesetzt werden.

Soweit dies für erforderlich angesehen wird kann die zweite Schicht mit einem hochtemperaturbeständigen Gewebe, einem Netz oder einem sogenannten Roving armiert sein.

Eine solche Armierung läßt sich beispielsweise wie folgt aufbringen:

Auf eine Mineralfaserplatte, die oberflächlich mit den genannten Nuten ausgebildet ist, wird ein keramischer Schlicker aufgegeben, der zunächst die genannten Nuten verfüllt und sich anschließend flächig über die verbleibenden Oberflächenabschnitte der Mineralfaserplatte erstreckt. In einem nächsten Arbeitsschritt wird ein Armierungsgewebe aufgelegt (zu diesem Zeitpunkt ist der keramische Schlicker noch nicht abgebunden) und danach wird eine weitere Schicht des keramischen Schlickers auf das Gewebe gelegt und zur Ausbildung einer möglichst glatten Oberfläche abgestrichen.

Ebenso ist es aber auch möglich, die zweite Schicht, auch nach Abbinden, auf ihrer Oberfläche mit einer dritten Schicht zu belegen, die beispielsweise wiederum aus einem temperaturbeständigen Gewebe, Netz oder Roving bestehen kann, welches dann zum Beispiel über geeignete Bindemittel aufgeklebt wird.

Eine andere Ausführungsform sieht vor, die zweite Schicht mit einer porösen keramischen Schaumschicht zu überdecken, beispielsweise einem Schaumzement.

Der Aufbau der beschriebenen Dämmplatte ist äußerst einfach und kann mit einfachen Verfahrensschritten erreicht werden. Insbesondere die monolithische Ausbildung der Deckschicht, gegebenenfalls auch im Seitenbereich der Dämmplatte, schafft nach Abbinden einen insgesamt stabilen und thermisch hochbelastbaren Verbundkörper, der - je nach Deckschicht - bis etwa 1.600 °C thermisch belastbar ist.

Weitere Merkmale der Erfindung ergeben sich aus den Merkmalen der Unteransprüche sowie den sonstigen Anmeldungsunterlagen.

Die Erfindung wird nachstehend anhand eines Ausführungsbeispieles näher beschrieben.

Dabei zeigen:
- Figur 1:: eine perspektivische Ansicht einer mit Nuten ausgebildeten Mineralfaserplatte,
- Figur 2:: eine perspektivische Ansicht der keramischen Deckschicht.

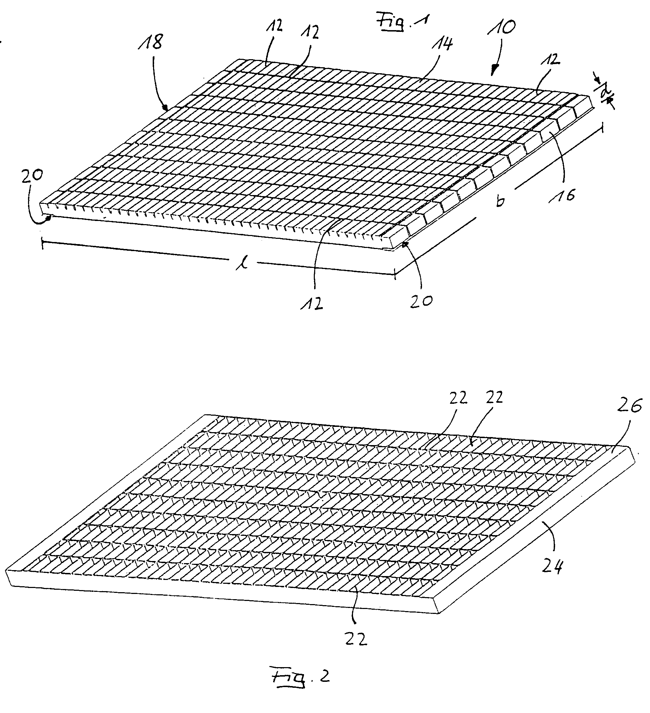

Figur 1 zeigt eine rechteckige Mineralfaserplatte 10 der Länge l und der Breite b sowie der Dicke d. Parallel zur Längserstreckung sowie der Breite sind Nuten 12 in der Mineralfaserplatte 10 ausgebildet (eingefräst), so daß sich insgesamt eine wabenartige Struktur der oberen Hauptoberfläche 14 ergibt.

Im Bereich der Breitseiten 16, 18 ist die Mineralfaserplatte 10 falzartig gestaltet und weist entsprechend unterseitig jeweils einen Rücksprung 20 auf.

Auf die so vorkonfektionierte Mineralfaserplatte 10 wird anschließend ein hochtonerdehaltiger keramischer Schlicker (nicht dargestellt) aufgegeben, der selbstfließende Eigenschaften aufweist und entsprechend zunächst in die Nuten 12 eindringt und diese ausfüllt sowie anschließend die zwischen den Nuten ausgebildeten Flächenabschnitte der Hauptoberfläche 14 abdeckt.

Im dargestellten Ausführungsbeispiel wurde die Mineralfaserplatte 10 dazu in eine Form eingelegt, deren innere Abmessungen geringfügig größer als die Außenabmessungen der Mineralfaserplatte 10 waren. Entsprechend konnte erreicht werden, daß der keramische Schlicker auch den umlaufenden Spalt zwischen der Mineralfaserplatte 10 und der Form ausfüllte und ergänzend dazu in den Bereich der Rücksprünge 20 eindrang, so daß sich im Ergebnis ein keramischer Formkörper 30 ausbildete, wie er in Figur 2 dargestellt ist.

Zu erkennen sind die keramischen Stege 22 (im Bereich der Nuten 12) ebenso wie die flächigen Seitenabschnitte 24 und die Ausbildung zusätzlicher Flächenabschnitte 26 im Bereich der Rücksprünge 20.

## Patentansprüche

1. Dämmplatte mit folgenden Merkmalen:
a) einer ersten Schicht (10) auf Basis von Mineralfasern mit mehreren Ausnehmungen (12) auf mindestens einer Hauptoberfläche (14),
b) einer zweiten Schicht (30) aus einem keramischen Werkstoff, der die Ausnehmungen (12) der ersten Schicht mit korrespondierenden Stegen ausfüllt und im übrigen parallel zur korrespondierenden Hauptoberfläche (14) der ersten Schicht (10) verläuft.

2. Dämmplatte nach Anspruch 1, bei der der flächige Teil der zweiten Schicht (30) im Abstand zur ersten Schicht (10) verläuft.

3. Dämmplatte nach Anspruch 1, bei der der flächige Teil der zweiten Schicht die korrespondierende Hauptoberfläche (14) der ersten Schicht (10) bedeckt.

4. Dämmplatte nach Anspruch 1, bei der die Ausnehmungen (12) nutartig gestaltet ist.

5. Dämmplatte nach Anspruch 1, bei der die Ausnehmungen (12) als sich gitterartig kreuzende Nuten ausgebildet sind.

6. Dämmplatte nach Anspruch 1, bei der die Ausnehmungen (12) eine unterschiedliche Tiefe aufweisen.

7. Dämmplatte nach Anspruch 1, bei der die Ausnehmungen (12) eine unterschiedliche Breite aufweisen.

8. Dämmplatte nach Anspruch 1, bei der die zweite Schicht (30) die erste Schicht (10) zusätzlich auf mindestens zwei Seitenflächen (16, 18) bedeckt.

9. Dämmplatte nach Anspruch 1, bei der die erste Schicht (10) aus einer Mineralfaserplatte besteht.

10. Dämmplatte nach Anspruch 1, bei der die zweite Schicht (30) aus einem feuerfesten keramischen Werkstoff besteht.

11. Dämmplatte nach Anspruch 10, bei der die zweite Schicht (30) aus einem hochtonerdehaltigen Werkstoff besteht.

12. Dämmplatte nach Anspruch 1, bei der das Dickenverhältnis der ersten Schicht (10) zur zweiten Schicht (30) 10:1 bis 3:1 beträgt.

13. Dämmplatte nach Anspruch 1, bei der zumindest einzelne Seitenflächen (16, 18) falzartig gestaltet sind.

14. Dämmplatte nach Anspruch 1, bei der zumindest einzelne Seitenflächen (16, 18) längsverlaufende Nuten aufweisen.

15. Dämmplatte nach Anspruch 1, bei der zumindest einzelne Seitenflächen (16, 18) mittige, federartige Stege aufweisen.

16. Dämmplatte nach Anspruch 1 mit einer, auf der zweiten Schicht (30) angeordneten dritten Schicht aus einem hochtemperaturbeständigen Gewebe, Netz oder Roving.

17. Dämmplatte nach Anspruch 1 mit einer, auf der zweiten Schicht angeordneten porösen keramischen Schaumschicht.

18. Dämmplatte nach Anspruch 17, bei der die poröse keramische Schaumschicht aus einem Schaumzement besteht.

19. Dämmplatte nach Anspruch 1, bei der die zweite Schicht (30) mit einem hochtemperaturbeständigen Gewebe, Netz oder Roving armiert ist.
